# EUROPEAN PATENT APPLICATION

(11) **EP 4 610 068 A1**
(43) Date of publication of application: **03.09.2025**
(21) Application number: 23926381.7
(22) Date of filing: 28.07.2023
(51) Int. Cl.: B60G 7/00

(54) **SUSPENSION ARM**

(30) Priority: 03.03.2023 JP 2023032873
(71) Applicant: Toyoda Iron Works Co., Ltd., Toyota-shi, Aichi 471-8507 (JP)
(72) Inventor: WAKAO Masashi, Toyota-shi, Aichi 471-8507 (JP); YANAGIYA Tomonori, Toyota-shi, Aichi 471-8507 (JP); MIYASHITA Osamu, Toyota-shi, Aichi 471-8507 (JP); KAMIYA Keisuke, Toyota-shi, Aichi 471-8507 (JP)
(74) Representative: Mewburn Ellis LLP
(86) International application number: PCT/JP2023/027813
(87) International publication number: WO 2024/185172

(57) **Abstract**

A suspension arm includes an arm body (40) and a molded plastic portion (60) that is formed through injection molding using the arm body (40) as an insert. The arm body (40) includes a bottom wall (41), a first side wall (42A), a second side wall (42B), and a flange. The molded plastic portion (60) includes a first side wall cover (61) covering an outer surface of the first side wall (42A), a flange cover covering the flange, and a protrusion protruding downward from the flange cover and being continuous with the first side wall cover (61). The flange cover includes an inclination surface inclined upward toward a basal end of the flange in a facing direction. The protrusion includes a curved surface curved so that a distance to the first side wall cover (61) gradually decreases as the curved surface extends downward.

## Description

### TECHNICAL FIELD

The present disclosure relates to a suspension arm.

### BACKGROUND ART

Conventionally, a vehicle such as an automobile is equipped with suspension arms that connect wheels to the vehicle body.

A suspension arm described in Patent Literature 1 includes a main body and a cover bonded to the main body via vulcanization. The main body includes a bottom wall and two side walls, which project from the bottom wall and face each other. The two side walls each have a distal end including a flange. The flanges project in opposite directions.

The cover includes a front half portion. The front half portion covers, from the front, one of the two side walls located at a front side of the vehicle. The front half portion covers the flange of the side wall located at the front side of the vehicle. The front half portion has a triangular cross section. This causes the suspension arm to have a streamlined-shaped cross section. Thus, the cover functions as a flow regulating member that reduces air resistance caused by airflow from the front during traveling.

### CITATION LIST

### Patent Literature

Patent Literature 1: Japanese Laid-Open Patent Publication No. 2006-56463

### SUMMARY OF INVENTION

### Technical Problem

Patent Literature 1 does not specifically address the effect of the shape of the portion of the cover covering the flange on the aerodynamic characteristics of the suspension arm. Therefore, there remains room for improvement in the aerodynamic characteristics of the suspension arm.

### Solution to Problem

In an aspect of the present disclosure, a suspension arm includes an arm body and a molded plastic portion that is formed through injection molding using the arm body as an insert. The arm body includes a bottom wall, a first side wall and a second side wall projecting upward from the bottom wall, the first side wall and the second side wall facing each other, the first side wall having a distal end in a projection direction, and a flange projecting from the distal end of the first side wall. A direction in which the first side wall and the second side wall face each other is referred to as a facing direction. The flange projects away from the second side wall in the facing direction. The molded plastic portion includes a first side wall cover covering an outer surface of the first side wall, a flange cover covering the flange, and a protrusion protruding downward from the flange cover and being continuous with the first side wall cover. The flange cover includes an inclination surface inclined upward toward a basal end of the flange in the facing direction. The protrusion includes a curved surface curved so that a distance to the first side wall cover gradually decreases as the curved surface extends downward.

### BRIEF DESCRIPTION OF DRAWINGS

Fig. 1 is a cross-sectional view of a lower arm, which is an embodiment of a suspension arm.
Fig. 2 is a schematic diagram showing a suspension device of a vehicle in which the lower arm shown in Fig. 1 is employed.
Fig. 3 is a perspective view of the lower arm shown in Fig. 1.
Fig. 4 is an exploded perspective view of an arm body and a reinforcing member forming the lower arm shown in Fig. 1 in a separated state.
Fig. 5 is a perspective view showing the bottom surface of the lower arm shown in Fig. 1.
Fig. 6 is an enlarged cross-sectional view of the lower arm shown in Fig. 1 mainly showing a first flange cover.
Fig. 7 is an enlarged cross-sectional view of the lower arm shown in Fig. 1 mainly showing a second flange cover.
Fig. 8 is a graph showing the relationship between the Cd value (coefficient of drag) and the inclination surface angle of a first inclination surface of the lower arm shown in Fig. 1.
Fig. 9 is a graph showing the relationship between the Cl value (coefficient of lift) and the inclination surface angle of the first inclination surface of the lower arm shown in Fig. 1.
Fig. 10 is a graph showing the relationship between the Cd value (coefficient of drag) and the inclination surface angle of a second inclination surface of the lower arm shown in Fig. 1.
Fig. 11 is a graph showing the relationship between the Cl value (coefficient of lift) and the inclination surface angle of the second inclination surface of the lower arm shown in Fig. 1.
Fig. 12 is a graph showing the relationship between the Cd value (coefficient of drag) and the curvature radius of a first curved surface of the lower arm shown in Fig. 1.
Fig. 13 is a graph showing the relationship between the Cl value (coefficient of lift) and the curvature radius of the first curved surface of the lower arm shown in Fig. 1.

### DESCRIPTION OF EMBODIMENTS

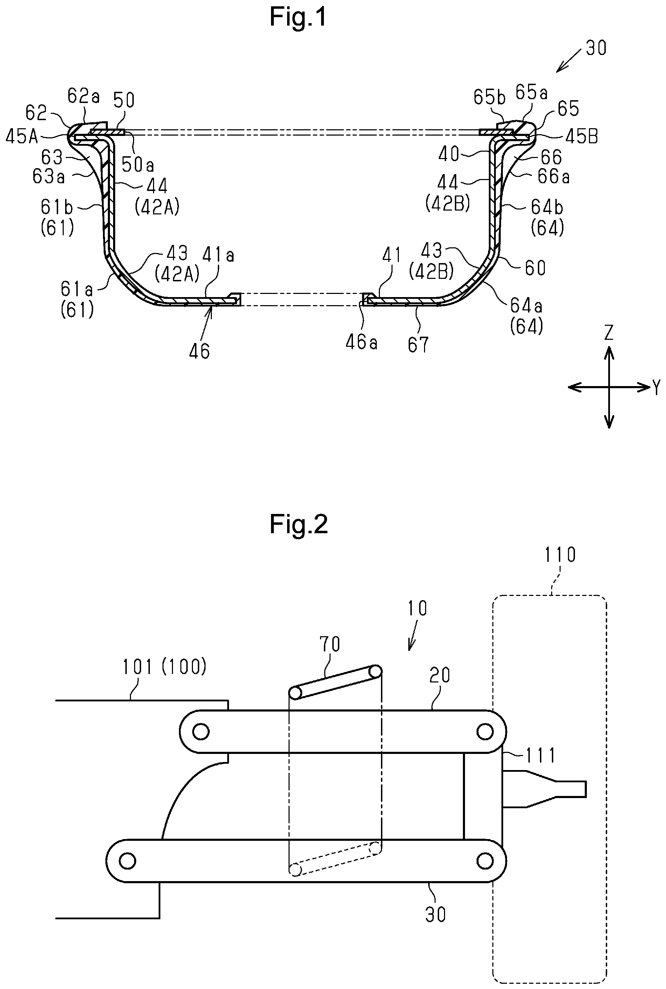

An embodiment of a suspension arm will now be described with reference to Figs. 1 to 13. In the present embodiment, the suspension arm is employed as a lower arm of a suspension device.

### (Suspension Device 10)

As shown in Fig. 2, a suspension device 10 is arranged between a vehicle body 100 and a wheel 110, and swingably supports the wheel 110 in relation to the vehicle body 100. The suspension device 10 is configured to mitigate an impact transmitted from the road surface to the vehicle body 100 via the wheel 110 and to force the wheel 110 against the road surface.

The suspension device 10 includes an upper arm 20, a lower arm 30, and a suspension spring 70.

The upper arm 20 and the lower arm 30 extend in a vehicle-width direction. The upper arm 20 is arranged above the lower arm 30. The upper arm 20 and the lower arm 30 couple a support member 111 for supporting the wheel 110 to a frame 101 of the vehicle body 100.

The suspension spring 70 extends in a vertical direction. The suspension spring 70 includes a lower end supported by the lower arm 30.

### (Lower Arm 30)

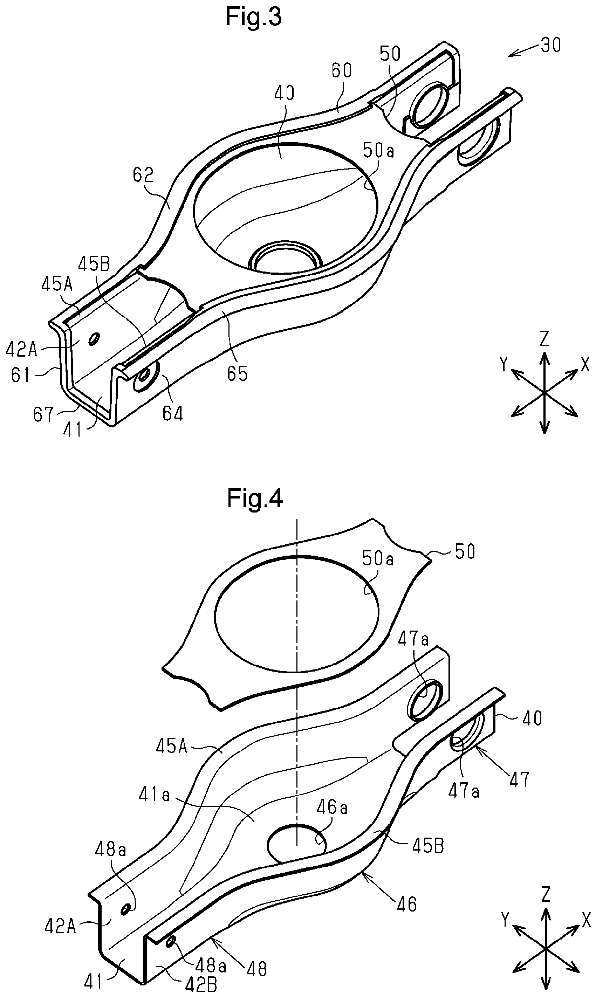

As shown in Fig. 3, the lower arm 30 includes an arm body 40, a reinforcing member 50, and a molded plastic portion 60. The reinforcing member 50 is joined to the arm body 40. The molded plastic portion 60 is formed through injection molding using the arm body 40 and the reinforcing member 50 as inserts.

### (Arm Body 40)

As shown in Fig. 4, the arm body 40 includes a bottom wall 41, a first side wall 42A, a second side wall 42B, a first flange 45A, and a second flange 45B. The bottom wall 41 is elongated in the vehicle-width direction. The first side wall 42A and the second side wall 42B project upward from opposite side edges of the bottom wall 41 and face each other. A direction in which the first side wall 42A and the second side wall 42B project from the bottom wall 41 is referred to as a projection direction. A direction in which the first side wall 42A and the second side wall 42B face each other is referred to as a facing direction. The first side wall 42A has a distal end in the projection direction. The first flange 45A projects from the distal end of the first side wall 42A away from the second side wall 42B in the facing direction. The second side wall 42B has a distal end in the projection direction. The second flange 45B projects from the distal end of the second side wall 42B away from the first side wall 42A in the facing direction. The arm body 40 is open upward.

The arm body 40 is arranged so that the first side wall 42A and the second side wall 42B are respectively located at the front side and the rear side of the vehicle.

Hereinafter, the longitudinal direction of the bottom wall 41 is referred to as an X-axis direction. The facing direction is referred to as a Y-axis direction. A direction (projection direction) orthogonal to both the X-axis direction and the Y-axis direction is referred to as a Z-axis direction. The X-axis direction coincides with the vehicle-width direction. The Y-axis direction coincides with the front-rear direction of the vehicle. The Z-axis direction coincides with the vertical direction.

The arm body 40 is formed by, for example, pressing a metal plate. The material of the arm body 40 is, for example, a metal material such as high-tensile steel.

The bottom wall 41 includes an intermediate portion 41a in the X-axis direction. The intermediate portion 41a is greater in width in the Y-axis direction than other portions of the bottom wall 41. The width in the Y-axis direction of the intermediate portion 41a gradually decreases toward the opposite ends in the X-axis direction. The intermediate portion 41a of the bottom wall 41 is spindle-shaped as viewed in the Z-axis direction.

Portions of the bottom wall 41 located adjacent to opposite sides of the intermediate portion 41a in the X-axis direction extend linearly in the X-axis direction.

The first side wall 42A and the second side wall 42B are symmetrical in the Y-axis direction. Hence, the structure of the first side wall 42A will be described below, and the description of the structure of the second side wall 42B may be omitted.

The first side wall 42A extends over the entire bottom wall 41 in the X-axis direction. An end portion of the first side wall 42A in the X-axis direction projects beyond the bottom wall 41 in the X-axis direction, defining a first joint 47 described later.

As shown in Fig. 1, a portion of the first side wall 42A projecting upward from the intermediate portion 41a includes an inclined portion 43 continuous with the bottom wall 41 and a linear portion 44 continuous with the inclined portion 43.

The inclined portion 43 is inclined so as to be separated farther from the second side wall 42B in the Y-axis direction as the inclined portion 43 extends upward.

The linear portion 44 extends linearly in the Z-axis direction. The linear portion 44 of the first side wall 42A and the linear portion 44 of the second side wall 42B extend parallel to each other.

As shown in Fig. 4, the first flange 45A extends over the entire first side wall 42A in the X-axis direction. The second flange 45B extends over the entire second side wall 42B in the X-axis direction.

The arm body 40 includes a spring receptacle 46, the first joint 47, and a second joint 48. The spring receptacle 46 include a central portion of the arm body 40 in the X-axis direction. The first joint 47 and the second joint 48 are arranged at opposite sides of the spring receptacle 46 in the X-axis direction.

### (Spring Receptacle 46)

The spring receptacle 46 includes the intermediate portion 41a, a portion of the first side wall 42A projecting from the intermediate portion 41a, and a portion of the second side wall 42B projecting from the intermediate portion 41a. The spring receptacle 46 define an accommodation space that accommodates the lower end of the suspension spring 70.

The portions of the first side wall 42A and the second side wall 42B forming the spring receptacle 46 bulge away from each other in the Y-axis direction.

A through hole 46a extends in the Z-axis direction through the bottom of the spring receptacle 46, that is, the intermediate portion 41a. The through hole 46a is circular.

(First Joint 47)

The first joint 47 is a portion of the arm body 40 that is joined to the vehicle body 100. The first joint 47 includes a portion of the first side wall 42A projecting beyond the bottom wall 41 in the X-axis direction, and a portion of the second side wall 42B projecting beyond the bottom wall 41 in the X-axis direction. The portions of the first side wall 42A and the second side wall 42B forming the first joint 47 extend parallel to each other in the X-axis direction. The portions of the first side wall 42A and the second side wall 42B forming the first joint 47 in the X-axis direction project beyond edges of the bottom wall 41 in the X-axis direction.

A first joint hole 47a extends in the Y-axis direction through each of the portions of the first side wall 42A and the second side wall 42B forming the first joint 47. The first joint 47 is rotatably coupled to the frame 101 of the vehicle body 100 via a rotation shaft (not shown) inserted into the first joint holes 47a.

### (Second Joint 48)

The second joint 48 is a portion of the arm body 40 that is joined to the wheel 110. The portions of the first side wall 42A and the second side wall 42B forming the second joint 48 extend parallel to each other in the X-axis direction.

A second joint hole 48a extends in the Y-axis direction through each of the portions of the first side wall 42A and the second side wall 42B forming the second joint 48. The second joint 48 is rotatably coupled to the support member 111 of the wheel 110 via a rotation shaft (not shown) inserted into the second joint holes 48a.

### (Reinforcing Member 50)

The reinforcing member 50 has the shape of a flat plate. The reinforcing member 50 covers the spring receptacle 46 from above. The reinforcing member 50 is spindle-shaped as viewed in the Z-axis direction.

The material of the reinforcing member 50 is, for example, a metal material such as high-tensile steel.

The reinforcing member 50 is joined by, for example, welding, to the upper surfaces of the portions of the first flange 45A and the second flange 45B forming the spring receptacle 46.

Two edges of the reinforcing member 50 in the Y-axis direction are arranged at an inner side of the edges in the Y-axis direction of the portions of the first flange 45A and the second flange 45B forming the spring receptacle 46.

The reinforcing member 50 has an insertion hole 50a into which the suspension spring 70 is inserted. The insertion hole 50a is continuous with the accommodating space of the spring receptacle 46.

### (Molded Plastic Portion 60)

As shown in Fig. 1, the molded plastic portion 60 includes a first side wall cover 61, a first flange cover 62, first protrusions 63, a second side wall cover 64, a second flange cover 65, second protrusions 66, and a bottom wall cover 67.

When the reinforcing member 50 is joined to the arm body 40 and then the arm body 40 is placed in a molding device (not shown) as an insert, the inside of the molding device is filled with resin to form the molded plastic portion 60.

The material of the molded plastic portion 60 is, for example, a thermoplastic material.

### (First Side Wall Cover 61)

The first side wall cover 61 covers an outer surface of the first side wall 42A. More specifically, the first side wall cover 61 covers a portion of the outer surface of the first side wall 42A excluding the periphery of the first joint hole 47a and the periphery of the second joint hole 48a. The outer surface of the first side wall 42A and a surface of the first side wall 42A facing the second side wall 42B are located at opposite sides of the first side wall 42A.

The first side wall cover 61 includes an inclined cover 61a covering the inclined portion 43 of the first side wall 42A and a linear cover 61b covering the linear portion 44 of the first side wall 42A. The inclined cover 61a extends along the outer surface of the inclined portion 43 of the first side wall 42A. The linear cover 61b extends along the outer surface of the linear portion 44 of the first side wall 42A.

Each end of the first side wall 42A located at opposite sides in the X-axis direction is covered by the first side wall cover 61 from both sides in the Y-axis direction and the corresponding side in the X-axis direction.

### (First Flange Cover 62)

The first flange cover 62 covers the first flange 45A. The first flange cover 62 covers the first flange 45A from both sides in the Z-axis direction and from a first side in the Y-axis direction. The first flange cover 62 covers the entire first flange 45A in the X-axis direction.

In the spring receptacle 46, the first flange cover 62 covers the joined portion of the first flange 45A and the reinforcing member 50 in addition to the first flange 45A.

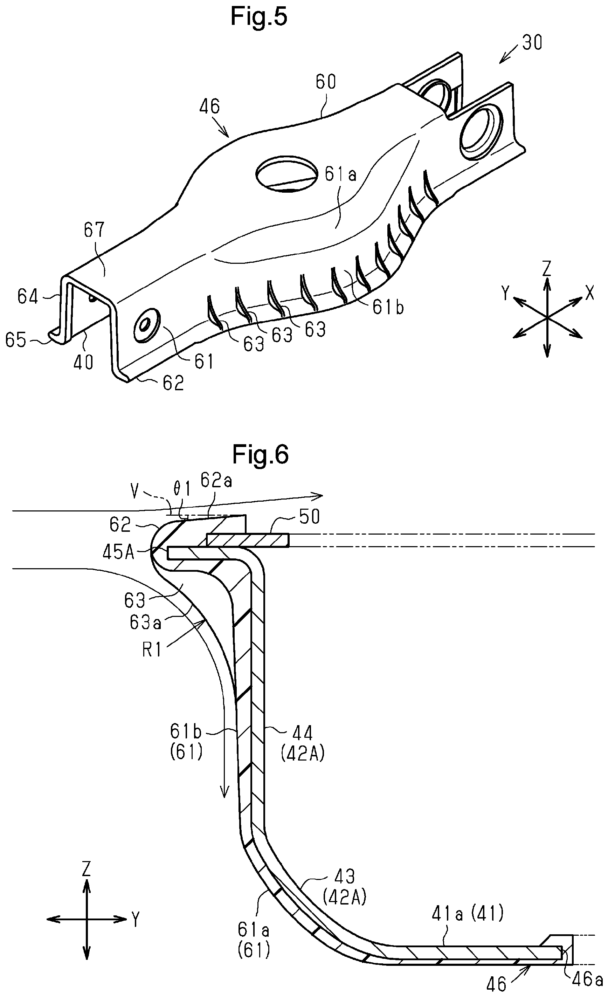

As shown in Fig. 6, the first flange cover 62 includes an upper portion including a first inclination surface 62a. The first inclination surface 62a is inclined upward toward the basal side in the Y-axis direction of the first flange 45A, that is, toward the rear side.

In an example, the first inclination surface 62a is arranged over the entire first flange cover 62 in the X-axis direction.

The first inclination surface 62a extends from above the distal end to above the basal end of the first flange 45A. The upper surface of the first flange cover 62 is, for example, defined by only the first inclination surface 62a.

### (First Protrusion 63)

As shown in Fig. 5, first protrusions 63 are arranged on a lower portion of the first flange cover 62 at intervals in the X-axis direction. The first protrusions 63 are arranged on a portion of the molded plastic portion 60 that covers the spring receptacle 46.

Each first protrusion 63 has the form of a thin plate. The first protrusion 63 is arranged on the lower portion of the first flange cover 62 so that the thickness-wise direction of the first protrusion 63 is parallel to the X-axis direction.

As shown in Fig. 6, the first protrusion 63 protrudes downward from the first flange cover 62 and is continuous with the linear cover 61b of the first side wall cover 61. Thus, the first protrusion 63 connects the linear cover 61b to the first flange cover 62.

The first protrusion 63 includes a first curved surface 63a curved so that the distance to the linear cover 61b gradually decreases as the first curved surface 63a extends farther from the first flange cover 62. More specifically, the first curved surface 63a is curved so that the distance to the linear cover 61b in the Y-axis direction gradually decreases as the first curved surface 63a extends downward. The first curved surface 63a is arcuate as viewed in the X-axis direction. The first curved surface 63a includes a lower end that is connected to the linear cover 61b in a stepless manner.

### (Second Side Wall Cover 64)

As shown in Fig. 1, the second side wall cover 64 covers an outer surface of the second side wall 42B. More specifically, the second side wall cover 64 covers a portion of the outer surface of the second side wall 42B excluding the periphery of the first joint hole 47a and the periphery of the second joint hole 48a. The outer surface of the second side wall 42B and a surface of the second side wall 42B facing the first side wall 42A are located at opposite sides of the second side wall 42B.

The second side wall cover 64 includes an inclined cover 64a covering the inclined portion 43 of the second side wall 42B and a linear cover 64b covering the linear portion 44 of the second side wall 42B. The inclined cover 64a extends along the outer surface of the inclined portion 43 of the second side wall 42B. The linear cover 64b extends along the outer surface of the linear portion 44 of the second side wall 42B.

Each end of the second side wall 42B located at opposite sides in the X-axis direction is covered by the second side wall cover 64 from both sides in the Y-axis direction and the corresponding side in the X-axis direction.

### (Second Flange Cover 65)

The second flange cover 65 covers the second flange 45B. The second flange cover 65 covers the second flange 45B from both sides in the Z-axis direction and from a second side opposite to the first side in the Y-axis direction. The second flange cover 65 covers the entire second flange 45B in the X-axis direction.

In the spring receptacle 46, the second flange cover 65 covers the joined portion of the second flange 45B and the reinforcing member 50 in addition to the second flange 45B.

The second flange cover 65 includes an upper rear end including a second inclination surface 65a. The second inclination surface 65a is arranged above the distal end of the second flange 45B. The second inclination surface 65a is inclined downward toward the distal end of the second flange 45B in the Y-axis direction, that is, the rear side of the vehicle. In an example, the second inclination surface 65a is arranged over the entire second flange cover 65 in the X-axis direction.

The second flange cover 65 includes an upper front end including a third inclination surface 65b. The third inclination surface 65b is arranged above the basal end of the second flange 45B. The third inclination surface 65b is arranged closer, in the Y-axis direction, to the first side wall 42A than the second inclination surface 65a is. The third inclination surface 65b is inclined upward toward the distal end of the second flange 45B in the Y-axis direction, that is, the rear side of the vehicle. In an example, the third inclination surface 65b is arranged over the entire second flange cover 65 in the X-axis direction.

The second inclination surface 65a and the third inclination surface 65b are arranged adjacent to each other in the Y-axis direction. The boundary between the second inclination surface 65a and the third inclination surface 65b is located at the middle of the second flange cover 65 in the Y-axis direction. The upper surface of the second flange cover 65 is, for example, defined by only the second inclination surface 65a and the third inclination surface 65b.

### (Second Protrusion 66)

Second protrusions 66 are arranged on a lower portion of the second flange cover 65 at intervals in the X-axis direction. The second protrusions 66 are arranged on a portion of the molded plastic portion 60 that covers the spring receptacle 46. The second protrusions 66 are arranged at the same positions as the first protrusions 63 in the Y-axis direction.

Each second protrusion 66 has the form of a thin plate. The second protrusion 66 is arranged on the lower portion of the second flange cover 65 so that the thickness-wise direction of the second protrusion 66 is parallel to the X-axis direction.

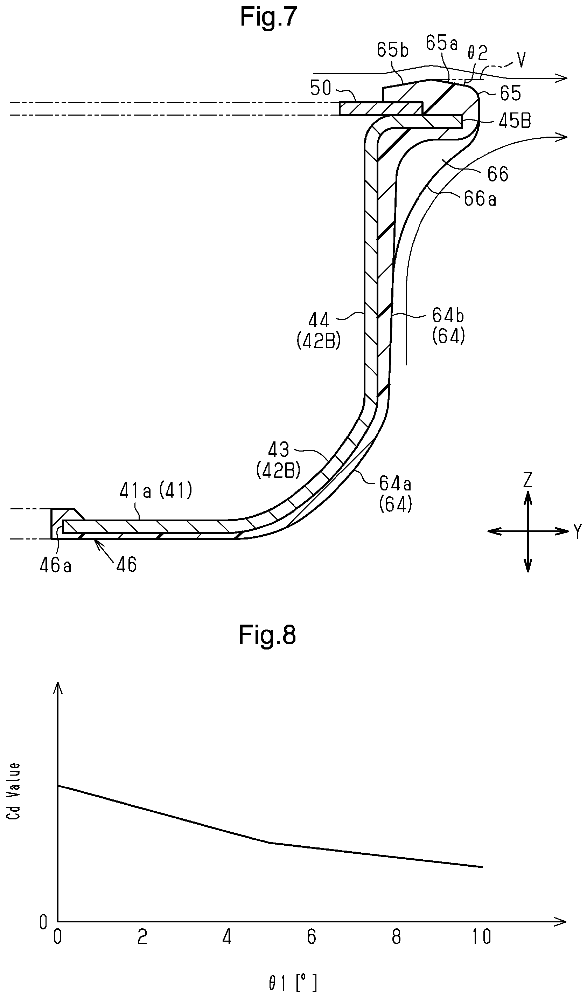

As shown in Fig. 7, the second protrusion 66 protrudes downward from the second flange cover 65 and is continuous with the linear cover 64b of the second side wall cover 64. Thus, the second protrusion 66 connects the linear cover 64b to the second flange cover 65.

The second protrusion 66 includes a second curved surface 66a curved so that the distance to the linear cover 64b gradually decreases as the second protrusion 66 extends further from the second flange cover 65. More specifically, the second curved surface 66a is curved so that the distance to the linear cover 64b in the Y-axis direction gradually decreases as the second curved surface 66a extends downward. The second curved surface 66a is arcuate as viewed in the X-axis direction. The second curved surface 66a includes a lower end that is connected to the linear cover 64b in a stepless manner.

### (Bottom Wall Cover 67)

As shown in Figs. 1 and 5, the bottom wall cover 67 covers the entire outer surface of the bottom wall 41. The outer surface of the bottom wall 41 is the lower surface of the bottom wall 41.

Each end of the bottom wall 41 located at opposite sides in the X-axis direction is covered by the bottom wall cover 67 from both sides in the Z-axis direction and the corresponding side in the X-axis direction.

As shown in Fig. 1, the bottom wall cover 67 covers the peripheral edge of the through hole 46a from both sides in the Z-axis direction and from the inner side of the through hole 46a.

### Simulation Result

The aerodynamic characteristics of the lower arm 30 with variations in an inclination surface angle θ1 of the first inclination surface 62a, an inclination surface angle θ2 of the second inclination surface 65a, and a curvature radius R1 of the first curved surface 63a will be described based on simulation results. In the simulation, the aerodynamic characteristics of the lower arm 30 were evaluated based on a case in which air flows from the first side wall 42A toward the second side wall 42B during traveling of the vehicle.

As shown in Fig. 6, in the simulation, the inclination surface angle θ1 is formed between the first inclination surface 62a and an imaginary axis V extending in the Y-axis direction as the first flange cover 62 is viewed in the X-axis direction. As shown in Fig. 7, the inclination surface angle θ2 is formed between the second inclination surface 65a and the imaginary axis V as the second flange cover 65 is viewed in the X-axis direction.

Fig. 8 is a graph showing changes in the Cd value, which is the coefficient of drug of the lower arm 30 (hereinafter, simply referred to as the Cd value), when the inclination surface angle θ1 is changed from 0° to 10°.

As shown in Fig. 8, the Cd value was observed to decrease as the inclination surface angle θ1 was increased. In the simulation, the Cd value was the smallest when the inclination surface angle θ1 was 10°.

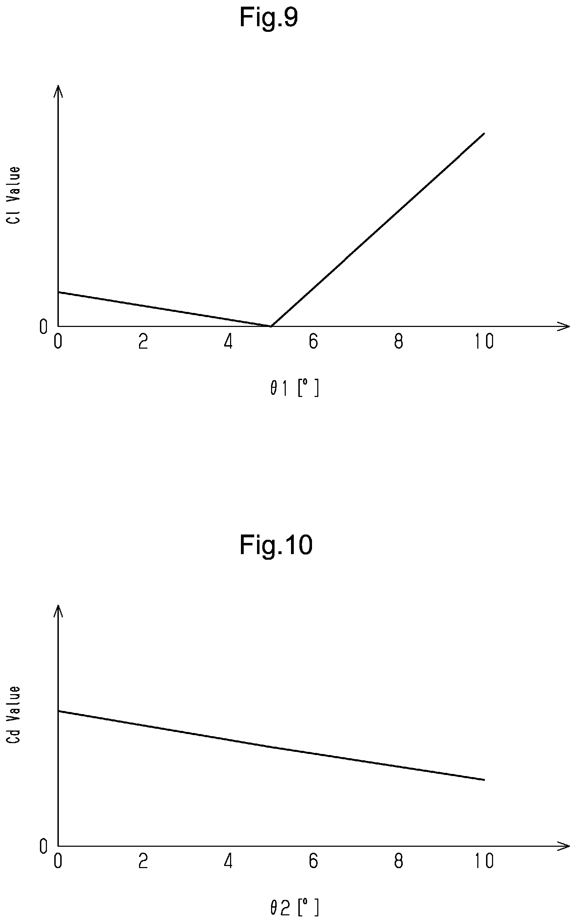

Fig. 9 is a graph showing changes in the Cl value, which is the coefficient of lift of the lower arm 30 (hereinafter, simply referred to as the Cl value), when the inclination surface angle θ1 is changed from 0° to 10°.

As shown in Fig. 9, the Cl value was observed to decrease as the inclination surface angle θ1 was increased from 0° to 5°, and to increase as the inclination surface angle θ1 was increased from 5°. In the simulation, the Cl value was the smallest when the inclination surface angle θ1 was 5°. When the inclination surface angle θ1 was 10°, the Cl value was larger than when the inclination surface angle θ1 was 0°.

Fig. 10 is a graph showing changes in the Cd value when the inclination surface angle θ2 is changed from 0° to 10°.

As shown in Fig. 10, the Cd value was observed to decrease as the inclination surface angle θ2 was increased. In the simulation, the Cd value was the smallest when the inclination surface angle θ2 was 10°.

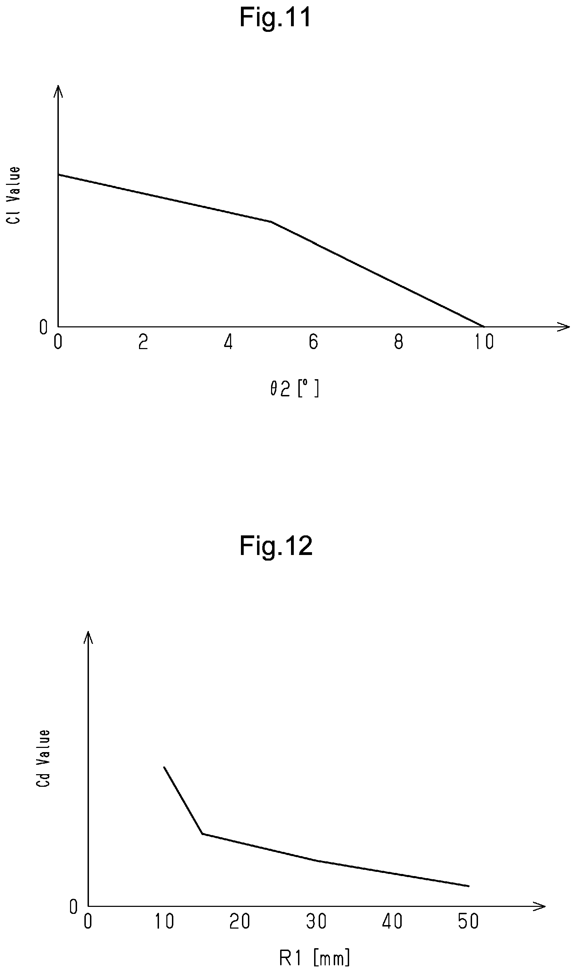

Fig. 11 is a graph showing changes in the Cl value when the inclination surface angle θ2 is changed from 0° to 10°.

As shown in Fig. 11, the Cl value was observed to decrease as the inclination surface angle θ2 was increased toward 10°. In the simulation, the Cl value was the smallest when the inclination surface angle θ2 was 10°.

Fig. 12 is a graph showing changes in the Cd value when the curvature radius R1 is changed from 10 mm to 50 mm.

As shown in Fig. 12, the Cd value was observed to decrease as the curvature radius R1 was increased. In the simulation, the Cd value was the smallest when the curvature radius R1 was 50 mm.

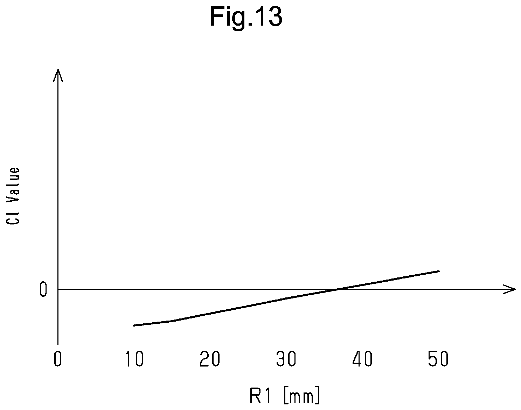

Fig. 13 is a graph showing changes in the Cl value when the curvature radius R1 is changed from 10 mm to 50 mm.

As shown in Fig. 13, the Cl value was observed to increase as the curvature radius R1 was increased.

When the Cl value is significantly below zero, the rolling resistance of the vehicle increases. Therefore, it is preferred that the Cl value be approximately zero. In the simulation, when the curvature radius R1 was 10 mm, the Cl value was less than zero. When the curvature radius R1 was 50 mm, the Cl value was greater than zero. When the curvature radius R1 was about 30 mm, the Cl value was approximately zero.

Thus, the aerodynamic characteristics of the lower arm 30 is improved effectively by setting the inclination surface angle θ1 to 5°, the inclination surface angle θ2 to 10°, and the curvature radius R1 to 30 mm.

The lower portion of the first flange cover 62 generates a flow of air acting to force the first flange cover 62 upward. Thus, to decrease the Cl value, it is preferred that the length of the first flange cover 62 in the Y-axis direction be decreased within a range that ensures the welding margin for the first flange 45A and the reinforcing member 50. The same applies to the second flange cover 65.

The operation and advantages of the present embodiment will now be described.
(1) The lower arm 30 includes the arm body 40 and the molded plastic portion 60, which is formed by injection molding using the arm body 40 as an insert. The arm body 40 includes the bottom wall 41, the first side wall 42A and the second side wall 42B, which project upward from the bottom wall 41 and face each other, and the first flange 45A, which projects from the distal end, in the projection direction, of the first side wall 42A away from the second side wall 42B in the facing direction. The molded plastic portion 60 includes the first side wall cover 61 covering the outer surface of the first side wall 42A, the first flange cover 62 covering the first flange 45A, and the first protrusion 63 protruding downward from the first flange cover 62 and being continuous with the first side wall cover 61. The first flange cover 62 includes the first inclination surface 62a inclined upward toward the basal end of the first flange 45A in the facing direction. The first protrusion 63 includes the first curved surface 63a curved so that the distance to the first side wall cover 61 gradually decreases as the first curved surface 63a extends downward.

With the structure described above, as indicated by an arrow shown in Fig. 6, when the vehicle is traveling and air flows from the front toward the rear over the first flange cover 62, the air flows obliquely upward along the first inclination surface 62a. This regulates the air and limits an increase in drag generated on the lower arm 30. Further, the air flowing along the first inclination surface 62a forces the first inclination surface 62a downward. This limits an increase in lift force generated on the lower arm 30.

In addition, as indicated by the arrow in Fig. 6, when air flows from the front toward the rear under the first flange cover 62, the air flows obliquely downward along the first curved surface 63a. This regulates the air and limits an increase in drag generated on the lower arm 30. Further, since the air flows obliquely downward along the first curved surface 63a, a flow acting to force the first flange cover 62 upward is not likely to be generated. This limits an increase in lift force generated on the lower arm 30.

As described above, the aerodynamic characteristics of the lower arm 30 are improved.

(2) The arm body 40 includes the second flange 45B projecting from the distal end in the projection direction of the second side wall 42B away from the first side wall 42A in the facing direction. The molded plastic portion 60 includes the second flange cover 65 covering the second flange 45B. The second flange cover 65 includes the second inclination surface 65a inclined downward toward the distal end in the facing direction of the second flange 45B.

With the structure described above, as indicated by an arrow shown in Fig. 7, when the vehicle is traveling and air flows from the front toward the rear over the second flange cover 65, the air flows obliquely downward along the second inclination surface 65a. This regulates the air and limits an increase in drag generated on the lower arm 30. Further, the air flowing along the second inclination surface 65a forces the second inclination surface 65a downward. This limits an increase in lift force generated on the lower arm 30. Accordingly, the aerodynamic characteristics of the lower arm 30 are improved.

(3) The molded plastic portion 60 includes the second side wall cover 64 covering the outer surface of the second side wall 42B, and the second protrusion 66 protruding downward from the second flange cover 65 and being continuous with the second side wall cover 64. The second protrusion 66 includes the second curved surface 66a curved so that the distance to the second side wall cover 64 gradually decreases as the second curved surface 66a extends downward.

With the structure described above, as indicated by an arrow shown in Fig. 7, when the vehicle is traveling and air flows under the second flange cover 65 upward from a side where the bottom wall 41 is located, the air flows obliquely upward along the second curved surface 66a. This regulates the air and limits an increase in drag generated on the lower arm 30. Further, since the air flows obliquely upward along the second curved surface 66a, a flow acting to force the second flange cover 65 upward is not likely to be generated. This limits an increase in lift force generated on the lower arm 30. Accordingly, the aerodynamic characteristics of the lower arm 30 are improved.

(4) The second flange cover 65 includes the third inclination surface 65b inclined upward toward the distal end side of the second flange 45B. The third inclination surface 65b is arranged closer, in the facing direction, to the first side wall 42A than the second inclination surface 65a is.

With the structure described above, as indicated by an arrow shown in Fig. 7, when the vehicle is traveling and air flows from the front toward the rear over the second flange cover 65, the air flows obliquely upward along the third inclination surface 65b and then obliquely downward along the second inclination surface 65a. This regulates the air and limits an increase in drag generated on the lower arm 30. Further, the air flowing along the third inclination surface 65b forces the third inclination surface 65b downward. This limits an increase in lift force generated on the lower arm 30. Accordingly, the aerodynamic characteristics of the lower arm 30 are improved.

### Modified Examples

The present embodiment may be modified as follows. The present embodiment and the following modified examples can be combined as long as the combined modified examples remain technically consistent with each other.

The third inclination surface 65b may extend on only a portion of the second flange cover 65 in the X-axis direction.

The third inclination surface 65b may be omitted from the second flange cover 65.

The second protrusion 66 may be omitted from the molded plastic portion 60.

The second inclination surface 65a may extend on only a portion of the second flange cover 65 in the X-axis direction.

The second inclination surface 65a may be omitted from the second flange cover 65.

The second flange cover 65 may be omitted from the molded plastic portion 60. In this case, the second flange 45B may be omitted from the arm body 40.

The first inclination surface 62a may extend on only a portion of the first flange cover 62 in the X-axis direction.

The molded plastic portion 60 may include a single first protrusion 63 continuously extending in the X-axis direction.

The molded plastic portion 60 may include a single second protrusion 66 continuously extending in the X-axis direction.

The reinforcing member 50 may be omitted from the lower arm 30.

The lower arm 30 may be applied to the upper arm 20 of the suspension device 10.

## Claims

1. A suspension arm, comprising:
an arm body;
and a molded plastic portion that is formed through injection molding using the arm body as an insert, wherein
the arm body includes
a bottom wall,
a first side wall and a second side wall projecting upward from the bottom wall, the first side wall and the second side wall facing each other, the first side wall having a distal end in a projection direction, and
a flange projecting from the distal end of the first side wall,
a direction in which the first side wall and the second side wall face each other is referred to as a facing direction,
the flange projects away from the second side wall in the facing direction,
the molded plastic portion includes
a first side wall cover covering an outer surface of the first side wall,
a flange cover covering the flange, and
a protrusion protruding downward from the flange cover and being continuous with the first side wall cover,
the flange cover includes an inclination surface inclined upward toward a basal end of the flange in the facing direction, and
the protrusion includes a curved surface curved so that a distance to the first side wall cover gradually decreases as the curved surface extends downward.

2. The suspension arm according to claim 1, wherein
the flange includes a first flange,
the flange cover includes a first flange cover,
the inclination surface includes a first inclination surface,
the second side wall has a distal end in the projection direction,
the arm body further includes a second flange projecting from the distal end of the second side wall away from the first side wall in the facing direction,
the molded plastic portion further includes a second flange cover covering the second flange, and
the second flange cover includes a second inclination surface inclined downward toward a distal end, in the facing direction, of the second flange.

3. The suspension arm according to claim 2, wherein
the protrusion includes a first protrusion,
the curved surface includes a first curved surface,
the molded plastic portion includes
a second side wall cover covering an outer surface of the second side wall, and
a second protrusion protruding downward from the second flange cover and being continuous with the second side wall cover, and
the second protrusion includes a second curved surface curved so that a distance to the second side wall cover gradually decreases as the second curved surface extends downward.

4. The suspension arm according to claim 2 or 3, wherein
the second flange cover includes a third inclination surface inclined upward toward the distal end of the second flange, and
the third inclination surface is arranged closer, in the facing direction, to the first side wall than the second inclination surface is.
